(19) Europäisches Patentamt
European Patent Office
Office européen des brevets

(11) **EP 2 384 122 B1**

(12) **EUROPEAN PATENT SPECIFICATION**

(45) Date of publication and mention
of the grant of the patent:
**02.10.2013 Bulletin 2013/40**

(21) Application number: **09798941.2**

(22) Date of filing: **24.12.2009**

(51) Int Cl.:
*A23C 11/06* (2006.01)     *A23C 11/10* (2006.01)
*A23C 20/02* (2006.01)     *A23J 3/16* (2006.01)
*A23L 1/105* (2006.01)     *A23L 1/20* (2006.01)
*A23L 1/211* (2006.01)     *A23L 2/66* (2006.01)
*A23L 2/68* (2006.01)

(86) International application number:
**PCT/EP2009/067922**

(87) International publication number:
**WO 2010/086078 (05.08.2010 Gazette 2010/31)**

(54) **USE OF PHYTASE IN THE PREPARATION OF A FERMENTED SOY BASED PRODUCT**

VERWENDUNG VON PHYTASE BEI DER HERSTELLUNG EINES FERMENTIERTEN, AUF SOJA BASIERENDEN PRODUKTS

UTILISATION DE PHYTASE POUR LA PRÉPARATION D'UN PRODUIT À BASE DE SOJA FERMENTÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.01.2009 EP 09151775**

(43) Date of publication of application:
**09.11.2011 Bulletin 2011/45**

(73) Proprietors:
• **Unilever NV**
**3013 AL Rotterdam (NL)**
Designated Contracting States:
**AT BE BG CH CZ DE DK EE ES FI FR GR HR HU IS IT LI LT LU LV MC MK NL NO PL PT RO SE SI SK SM TR**
• **Unilever PLC, A Company Registered in England and**
**Wales under Company no. 41424**
**London EC4Y 0DY**
**Greater London (GB)**
Designated Contracting States:
**CY GB IE MT**

(72) Inventors:
• **BECKMANN, Christoph, Hendrik**
**NL-3133 AT Vlardingen (NL)**
• **MELLEMA, Michel**
**NL-3133 AT Vlardingen (NL)**

• **van VLIET, Cornelis**
**NL-3133 AT Vlardingen (NL)**
• **JANSEN, Franciscus, Johannes, Henricus, Maria**
**NL-3133 AT Vlardingen (NL)**

(74) Representative: **Acham, Nicholas Clive**
**Unilever Patent Group**
**Colworth House**
**Sharnbrook**
**Bedford**
**MK44 1LQ (GB)**

(56) References cited:
**WO-A-01/62947     WO-A-2006/043478**

• **B.F.HARLAND, G.NARULA: "Food phytate and its hydrolysis products" NATIONAL RESEARCH, vol. 19, no. 6, 1999, pages 947-961, XP002522354**
• **S.W.K.SOUCI, W.FACHMANN,H.KRAUT: "Food Compositions and Nutritional Tables" 2000, MEDPHARM , STUTTGART , XP002522355 pages 837-838**
• **A.S.SANDBERG: "FOOD PROCESSING INFLUENCING IRON AND ZINC BIOAVAILABILITY" TRACE ELEMENTS IN MAN AND ANIMALS-9: PROCEEDINGS OF THE NINTH INTERNETAIONAL SYMPOSIUM ON TRACE ELEMENTS IN MAN AND ANIMALS, 1997, pages 10-14, XP001539308**

• BLAGDEN TRENNA D ET AL: "Reduction of levels of volatile components associated with the Beany flavor in soymilk by Lactobacilli and Streptococci" JOURNAL OF FOOD SCIENCE, WILEY-BLACKWELL PUBLISHING, INC, US, vol. 70, no. 3, 1 April 2005 (2005-04-01), pages M186-M189, XP002471713 ISSN: 0022-1147

• MURTI T W ET AL: "BACTERIAL GROWTH AND VOLATILE COMPOUNDS IN YOGHURT-TYPE PRODUCTS FROM SOYMILK CONTAINING BIFIDOBACTERIUM SSP" JOURNAL OF FOOD SCIENCE, WILEY-BLACKWELL PUBLISHING, INC, US, vol. 58, no. 1, 1 January 1993 (1993-01-01), pages 153-157, XP000356108 ISSN: 0022-1147

**Description**

TECHNICAL FIELD OF THE INVENTION

The present invention relates to the use of phytase in a method of preparing a fermented soy-based product and to a fermented soy-based product that has been subjected to treatment with phytase.

Soy derived products, such a soy protein concentrates and isolates, naturally contain considerable quantities of phytic acid (inositol hexaphosphate). Phytic acid is an undigestible potent chelator that strongly binds multivalent metal cations such as $Fe^{2+}$, $Fe^{3+}$, $Mg^{2+}$, $Ca^{2+}$ and $Zn^{2+}$. Since some of the latter minerals naturally occur in soy derived products, the phytic acid contained in these products adversely affects the bioavailability of these minerals. Thus, whereas soy contains appreciable levels of the aforementioned minerals, these soy minerals have limited nutritional relevance due to the fact that their bioavailability is low. Furthermore, the phytic acid naturally present in soy derived products also adversely affects bioavailability of supplemented minerals such as $Fe^{2+}$, Zn2+ and $Cu^{2+}$.

Phytase can be used to break down phytic acid into digestible components. Thus, phytase treatment can be used to enhance the bioavailability of multivalent metal cations that are contained in soy derived products.

BACKGROUND OF THE INVENTION

Phytase treatment of soy derived products is disclosed in WO 2006/098721. This international patent application describes a process for the preparation of a protein material having a reduced phytic acid content, said process comprising:

> a. preparing an aqueous extract from a protein containing plant material,
> b. adjusting the pH of the extract to precipitate the protein material,
> c. separating the precipitated protein material and forming a suspension of the precipitated protein material in water,
> d. increasing the pH of the suspension to form a (partially) solubilized protein material in water, and
> e. drying the protein material;

wherein phytase is incorporated in the aqueous extract prior to pH adjustment or to the (partially) solubilised protein material before drying. WO 2006/098721 further describes an acidic beverage composition having a pH of 3.0 to 4.5 comprising a hydrated protein material obtained by the above mentioned process, a hydrated protein stabilizing agent and edible acid.

US 2007/0014910 describes an acidic, protein-containing drink comprising 0.6-4.6 wt.% of a soy protein product, wherein the soy protein product is prepared by a process comprising acid precipitation of the protein, :

- preparing a soy protein extract from a soy protein-containing plant material;
- contacting the soy protein extract with an acid to form a soy protein precipitate;
- contacting the soy protein precipitate with a hydrating solution to form a soy protein suspension;
- introducing a phytic acid degrading enzyme into the soy protein suspension and reacting the soy protein suspension with the phytic acid degrading enzyme for 30 seconds to 50 minutes to form a modified soy protein material;
- adjusting the pH of the modified soy protein material to a pH of 6.5 to 8.0 to form a neutralized soy protein material;
- heating the neutralized soy protein material to a temperature of 132-160°C for 1-30 seconds to form a heat treated soy protein material; and
- drying the heat treated soy protein material to form the soy protein product.

Alternative embodiments of this process, in which the phytic acid degrading enzyme is introduced prior to acid precipitation or after neutralization, are also described.

WO 2006/043478 describes a method of preparing a fermented soy milk having excellent flavour with reduced greenish (grassy) taste and harsh palate, a smooth texture and a favourable feel on the palate, said method comprising carrying out a lactic acid fermentation starting with soy milk which has been treated with an enzyme having phytic acid decomposing enzyme activity. WO 2006/043478 teaches to deactivate the phytase by sterilization after the phytic acid has been decomposed.

A drawback of the above mentioned methods resides in the fact that phytase treated soy protein compositions exhibit a strongly reduced oxidative stability. This reduced oxidative stability, as evidenced by an increased predisposition to develop oxidation off-flavours, results from the fact that phytase treatment negates the sequestering effect of phytic acid on e.g. iron and copper cations. Both iron and copper are well-known pro-oxidants that catalyze lipid oxidation, notably the oxidation of polyunsaturated fatty acids that yields strong smelling aldehydes. Since oxidation-sensitive polyunsaturated fatty acids are usually abundantly present in soy derived materials, enzymatic degradation of phytic acid will decrease the oxidative stability of said soy derived materials. This decreased oxidative stability becomes manifest in an increased tendency of such soy derived materials to develop off-flavours during storage, processing or in the final product application.

SUMMARY OF THE INVENTION

The inventors have discovered that in lactic acid bacteria fermented soy based products it is possible to realise the benefits of phytase treatment, e.g. increasing bioavailability of iron, whilst at the same time minimizing adverse effects associated with reduced oxidative stability.

More particularly, the present inventors have unexpectedly found that if phytase treatment and fermentation are conducted concurrently, the negative effect of phytic acid degradation on lipid oxidation and especially on off-flavour formation can be minimized very effectively. The inventors have also found that off-flavor formation may be further minimized by terminating the fermentation of the soy-based substrate using pasteurization, cooling and/or pH-adjustment.

Thus, the present invention concerns a method of preparing a fermented soy- based product, said method comprising:

a. providing an aqueous liquid containing 0.5-10 wt.% of soy protein;
b. pasteurizing or sterilizing the aqueous liquid;
c. inoculating the pasteurised or sterilised liquid with a lactic acid bacterium containing starter culture;
d. fermenting the inoculated aqueous liquid by incubation at a temperature in the range of 15-48 °C for 0.5-24 hours to obtain a fermented product;

wherein phytase is added to the pasteurized or sterilized liquid no later than 10 minutes before termination of fermentation step d, said phytase being incorporated in the pasteurized or sterilized liquid in an amount of not more than 11 FTU per gram of soy protein; one FTU being the activity of phytase that generates 1 μmol of inorganic phosphorus per minute from an excess of sodium phytate at pH 5.5 and 37°C; and wherein fermentation step d. is terminated by one or more of the following actions:

• pasteurization of the fermented product;
• cooling of the fermented product to a temperature of less than 10 °C;
• adjustment of the pH of the fermented product to a pH of less than 4.5.

Although the inventors do not wish to be bound by theory, it is believed that in the present method the sequestering effect of the phytic acid is gradually decreased whilst at the same time the increased oxidation of unsaturated fatty acids resulting from the 'release' of previously sequestered iron and/or copper cations is counteracted by the ability of the lactic acid bacteria to digest off-flavour inducing oxidation products. Thus, the present method is capable of yielding a fermented product comprising metallic minerals, such as iron, that are highly bioavailable and that has little or no off-flavour. In contrast, if a soy protein material is subjected to phytase treatment and subsequently applied in a method that yields a fermented soy-based product, a more pronounced off-flavour will develop as non-sequestered metallic pro-oxidants can exert their full pro-oxidative effect during the preparation of the fermentation substrate and the subsequent fermentation.

Off- flavor formation is further minimized by terminating the fermentation by pasteurization, cooling or pH-adjustment. The inventors have found that e.g. sterilization of the fermented soy- based product gives rise to the formation of pronounced off- flavor notes. In contrast, such off- flavor note are hardly formed if fermentation is terminated by pasteurization, cooling or pH- adjustment.

The inventors have additionally discovered that fermented soy-based products containing considerable quantities of bioavailable iron and/or magnesium and exhibiting surprisingly high oxidative stability can be obtained by ensuring that the enzymatic breakdown of phytic acid progresses only to such an extent that the average number of phosphate residues in the inositol phosphates (i.e. inositol mono- to hexa-phosphates) contained in the fermented product is within the range of 1.5-4.0.

Accordingly, another aspect of the invention relates to a fermented product not subject of claimed matter containing:

• 0.5-10 wt.% of soy protein;
• 0.1-20 wt.% of oil having a polyunsaturated fatty acid content of at least 0.1% by weight of the fermented product;
• 0.01- 7.5 mmol/l of iron and/or 0.5-375 mmol/l of magnesium;
• at least 3 μmol/l of inositol phosphates selected from inositol monophosphate, inositol diphosphate, inositol triphosphate, inositol tetraphosphate, inositol pentaphosphate, inositol hexaphosphate and combinations thereof; and;
• 20 to 99 wt.% of water;

wherein the average number of phosphate residues of the inositol phosphates contained in the fermented product is within the range of 1.5-4.0.

## DETAILED DESCRIPTION OF THE INVENTION

A first aspect of the present invention concerns a method of preparing a fermented soy-based product, said method comprising:

> a. providing an aqueous liquid containing 0.5-10 wt.% of soy protein;
> b. pasteurizing or sterilizing the aqueous liquid;
> c. inoculating the pasteurised or sterilised liquid with a lactic acid bacterium containing starter culture;
> d. fermenting the inoculated aqueous liquid by incubation at a temperature in the range of 15-48 °C for 0.5-24 hours to obtain a fermented product;

wherein phytase is added to the pasteurized or sterilized liquid no later than 10 minutes before termination of fermentation step d, said phytase being incorporated in the pasteurized or sterilized liquid in an amount of not more than 11 FTU per gram of soy protein; one FTU being the activity of phytase that generates 1 $\mu$mol of inorganic phosphorus per minute from an excess of sodium phytate at pH 5.5 and 37 °C; and wherein fermentation step d. is terminated by one or more of the following actions:

> • pasteurization of the fermented product;
> • cooling of the fermented product to a temperature of less than 10 °C;
> • adjustment of the pH of the fermented product to a pH of less than 4.5.

The term "lactic acid bacterium" as used herein refers to acid tolerant, non-sporulating, non-respiring rod-shaped Gram positive *bacilli* or *cocci* that produce lactic acid as the major metabolic endproduct of carbohydrate fermentation. As used herein, the term "lactic acid bacterium" does not encompass *Bifidobacterium.*

The term "lactate" as used herein encompasses lactic acid as well as edible salts of lactic acid.

The term "phytase" as used herein refers to an enzyme that is capable of breaking down phytic acid (inositol hexaphosphate), e.g. by hydrolyzing phytic acid so as to release one or more phosphates therefrom. Preferably, the phytase is capable of removing at least 3 phosphate groups from phytic acid.

The phytase can suitably be incorporated in the aqueous liquid containing soy protein by first adding the soy protein and subsequently the phytase. The phytase may also be incorporated in the aqueous liquid by first adding the phytase and subsequently the soy protein, or by adding phytase and soy protein simultaneously.

In the present method phytase is typically incorporated in the aqueous liquid or the pasteurized or sterilized liquid in an amount of at least 0.1 FTU per g of soy protein; one FTU being the activity of phytase that generates 1 $\mu$mol of inorganic phosphorus per minute from an excess of sodium phytate at pH 5.5 and 37 °C. A suitable methodology for determining phytase activity is described in M. Wyss et al.; Biophysical Characterisation of fungal phytases (myo-Inositol hexakisphosphate phosphohydrolase): Molecular size, glycosylation pattern, and engineering of proteolytic resistance. Appl. Envir. Micr., 65 (2), 359-366, 1999.

Preferably, the phytase is added in an amount of at least 0.2 FTU per g of soy protein, more preferably of at least 1 FTU  per gram of soy protein and most preferably at least 1.5 FTU per gram of soy protein. The inventors have found that it is advantageous to employ a relatively small amount of phytase so as to avoid full degradation of phytic acid into inositol and phosphoric acid. Accordingly, in a preferred embodiment, the amount of phytase activity added does not exceed 5 FTU per gram of soy protein and most preferably it does not exceed 2.3 FTU per gram of soy protein.

It is preferred to add the phytase well before termination of the fermentation step d. in order to realize the full benefits associated with the concurrent fermentation. According to a preferred embodiment, the phytase is added at least 30 minutes, preferably at least 1 hour before termination of fermentation step d.

Depending on the phytase dosage used and the fermentation conditions employed it is usually no problem to achieve sufficient degradation of phytic acid within 12 hours, or even within 6 hours. Thus, advantageously the phytase is added not more than 12 hours, even more preferably not more than 6 hours before termination of fermentation step d and most preferably not more than 4 hours before termination of fermentation step d.

Since some commercially available phytases exhibit very high thermostability it is feasible to add phytase to the present aqueous liquid prior to pasteurisation as sufficient phytase activity will remain after pasteurisation to achieve adequate degradation of phytic acid within e.g. 12 hours. In order to minimize loss of phytase activity, however, it is preferred to add the phytase to the pasteurized or sterilized aqueous liquid.

According to a particularly preferred embodiment, the phytase is added within 15 minutes of the inoculation of the pasteurised or sterilised liquid. Even more preferably, the  phytase is added within 10 minutes, or even within 5 minutes of the moment of the inoculation. Here the expression "within X minutes of" means that the phytase is added less than X minutes before inoculation and less than X minutes after inoculation.

By combining phytase addition with inoculation it can be ensured that phytase activity in the final fermented product is minimised, especially if such fermented product is pasteurized or sterilized. The inventors have found that sufficient degradation of phytic acid to substantially increase the bioavailability of minerals that are bound by the acid can be achieved by adding a low dose of phytase to the pasteurised or sterilised simultaneously with the inoculation of said liquid. Advantageously, the present method comprises the addition of phytase to the pasteurised or sterilised liquid in an amount that is equivalent to 0.0005-5.75 FTU/ml, more preferably in an amount of 0.005-0.58 FTU/ml and most preferably in an amount of 0.0075-0.23 FTU/ml.

By adding phytase in a low dose, phytase activity in the final fermented product can be kept low, and pasteurization will reduce said activity to an insignificant level, even if a heat-stable phytase is used. It will be understood that it is advantageous to have no phytase activity in the final product as such residual activity may adversely affect product stability. Typically, phytase activity in the fermented product does not exceed 0.12 FTU/ml. Even more preferably, phytase activity in the fermented product does not exceed 0.06 FTU/ml, most preferably it does not exceed 0.01 FTU/ml.

According to a particularly preferred embodiment, the present method comprises pasteurisation of the fermented product, said pasteurisation causing a reduction in phytase activity of at least 90%, more preferably of at least 95% and most preferably of at least 99%.

The dosage level in which phytase should be added in order to achieve a final product in which phytic acid has been degraded sufficiently to make bound minerals bioavailable as well as a final product that contains little or no phytase activity, especially if the product is pasteurised and/or a heat-stable phytase is used, depends on a number of factors such as the duration of the enzymolysis, pH, temperature, phytic acid concentration etc. The relationship between phytase activity and temperature and pH has been studied and can be described as follows:

$$10^{-(T+5)/15} \times 10^{(pH-11.5)/2} \leq \text{Dosage (in FTU/ml)} \leq 10^{-(T-25)/15} \times 10^{(pH-7.5)/2}$$

wherein T is within the range of 25 and 50°C and represents the fermentation temperature in °C and pH is within the range of 3.5 and 7.5 and represents the pH of the aqueous liquid when the phytase is added.

According to a particularly preferred embodiment, the present method utilizes a heat-stable phytase, The term "heat-stable phytase" as used herein refers to a phytase that when present in 10 mM sodium acetate (pH 7) in an amount of 5,75 FTU/ml, looses less than 50%, preferably less than 30% of said phytase activity when exposed to 80°C for 30 min.

The aqueous liquid employed in the present method advantageously comprises 0.75-6 wt%, preferably 2-3.5 wt% of soy protein. The soy protein content of the pasteurised or sterilized liquid as well as of the fermented product are preferably within these same ranges.

The soy protein may suitably be provided in the form of soy milk, soy milk powders, soy protein concentrate, soy protein isolate, hydrolysed soy protein isolate or a combination thereof. Suitable soy milk (extracts), soy protein concentrates, soy protein isolates or hydrolysed soy protein isolates are commercially available, for example from suppliers such as Solae, Cargill, Kerry Group plc and SunOpta plc. In a particular preferred embodiment of the invention the soy milk (extract), soy protein isolate or hydrolyzed soy protein isolate has been de- flavoured using any of the methods described in the prior art, such as for example in US 7, 108, 881.

The aqueous liquid containing soy protein is pasteurized or sterilized prior to fermentation in order to avoid microbial contamination. Sterilisation and pasteurization may be achieved using different techniques well-known in the art, such as heat treatment, membrane filtration, ultra high pressure etc.

The inventors have found that particularly good results may be obtained with the present method in case fermentation step d. comprises incubation at a temperature in the range of 25-48°C, even more preferably in the range of 30-43°C. Typically, said incubation has a duration of 0.5-14 hours, preferably of 0.5-10 hours and most preferably 1-8 hours.

The fermentation step d. is terminated by one or more of the following actions:

- pasteurization of the fermented product;
- cooling of the fermented product to a temperature of less than 10°C, preferably of less than 8°C;
- adjustment of the pH of the fermented product to a pH of less than 4.5.

Unlike sterilisation, the latter termination actions do not results in inactivation of the phytase. It was found, however, that it is not necessary to inactivate phytase in order to obtain a stable fermented product with excellent organoleptic properties.

In a further preferred embodiment the fermented product is homogenized to yield a product having a viscosity at 7°C of less than 50 mPa.s at 100 s$^{-1}$. Homogenization yields a very smooth fermented product of low viscosity that forms an excellent basis for a beverage.

Examples of lactic acid bacteria that may be used in the present method include: *Streptococcus thermophilus, Lactobacillus delbrueckii, Lactobacillus helveticus, Lactobacillus acidophilus, Lactobacillus casei, Lactobacillus* reuteri, *Lactobacillus rhamnosus, Lactobacillus brevis, Lactobacillus fermentum, Lactobacillus sake, Lactobacillus plantarum, Lactococcus lactis* subsp *lactis, Lactococcus lactis* subsp *cremoris Leuconostoc mesenteroides, Leuconostoc cremoris, Leuconostoc lactis.* Naturally, the present invention also encompasses the combined use of two or more of the aforementioned lactic acid bacteria.

In accordance with one embodiment of the present method, the lactic acid bacterium preferably produces a significant quantitity of lactic acid during fermentation step d. Accordingly, during fermentation step d. fermentative production of lactate preferably causes pH to decrease by at least 1.2 pH units, more preferably by at least 1.5 pH units.

According to another embodiment of the present method, only a limited a quantity of lactic acid is produced during fermentation step d., meaning that during said fermentation step production of lactate causes a pH decrease of less than 1.2 pH units, preferably of less than 1.0 pH unit. Mesophilic lactic acid bacteria are particularly suitable for use in accordance with this embodiment.

In order to produce a fermented product without off-flavour notes, the fermentation conditions in the present method are controlled so as to promote metabolisation of $C_5$-$C_9$ n-alkanals and/or *trans*-2-hexenal. Accordingly, in a particularly preferred embodiment of the present method, during the fermentation step d. the concentration of at least one $C_5$-$C_9$ n-alkanal, preferably of at least 3 $C_5$-$C_9$ n-alkanals does not increase. Even more preferably, during the fermentation step d. the concentration of at least one $C_5$-$C_9$ n-alkanal decreases by at least 30%, preferably by at least 50%.

In accordance with another preferred embodiment, during the fermentation step d. concentration of *trans*-2-hexenal does not increase. Even more preferably, during the fermentation step d. the concentration of *trans*-2-hexenal decreases by at least 30%, preferably by at least 50%.

A decrease in concentration of a particular substance by X% means that if the starting concentration was Y ppm, the decreased concentration equals Y (100- X) / 100 ppm.

The alkanal and alkenal concentrations referred to in this document are determined by the analytical methodology described in the examples.

Using the aforementioned analytical methods it is well within the skill of a person skilled in the art of food fermentation to select suitable LAB strains and to optimise the process conditions in such a way that the desired digestion of unwanted aldehydes is realised.

As explained herein before, the phytase treatment in the present method offers the advantage that it increases bioavailability of multivalent metal cations that were complexed by phytic acid. Since soy protein isolates and concentrates typically contain appreciable amounts of iron and/or magnesium, the present method is particularly effective in case the aqueous liquid contains at least 0.01 mmol/l of iron and/or at least 0.5 mmol/l of magnesium. Preferably, the iron concentration in the aqueous liquid is within the range of 0.02-7.5 mmol/l, more preferably within the range of 0.1-1 mmol/l. Likewise, the preferred magnesium concentration in the aqueous liquid lies within the range of 1-375 mmol/l, more preferably within the range of 5-50 mmol/l.

It will be understood that the benefits of the present method are most pronounced in case the pasteurized or sterilized liquid contains appreciable levels of phytic acid. Since partially hydrolysed forms of phytic acid, especially inositol-pentaphosphate, also have the ability to complex multivalent metals, also these inositol phosphates can adversely affect the bioavailability of minerals such as iron and magnesium. In accordance with a preferred embodiment the combined content of inositol-hexaphosphate and inositol-pentaphosphate of the aqueous liquid exceeds 1 μmol per gram of soy protein, more preferably it exceeds 5 μmol per gram of soy protein and most preferably it exceeds 20 μmol per gram of soy protein.

Since the present method aims to substantially reduce the levels of chelating phytic acid, the combined content of inositol-hexaphosphate and inositol-pentaphosphate of the fermented product preferably does not exceed 5 μmol per gram of soy protein. Even more preferably the combined content of inositol-hexaphosphate and inositol-pentaphosphate of the fermented product does not exceed 3 μmol per gram of soy protein, most preferably it does not exceed 1 μmol per gram of soy protein.

Typically, in the method of the present invention the combined content of inositol- hexaphosphate and inositol-pentaphosphate expressed in mol is reduced by at least 80% during the period starting with the addition of the phytase and ending with the termination of fermentation step d. Even more preferably the aforementioned reduction is at least 85%, most preferably at least 95%.

As a result of the phytase treatment, the present method yields a fermented product in which the average number of phosphate residues in the inositol phosphate esters is reduced substantially. Typically, inositol-hexaphosphate and inositol-pentaphosphate together represent less than 50 mol.%, more preferably less than 30 mol.%, and most preferably less than 15 mol.% of the total amount of inositol and inositol-phosphate that is contained in the fermented product.

Likewise, inositol- diphosphate and inositol- triphosphate together preferably represent at least 30 mol. %, more preferably at least 50 mol. % of the total amount of inositol- phosphate that is contained in the fermented product.

The inventors have discovered that it is advantageous to manipulate the enzymatic breakdown of phytic acid in order to ensure that on the one hand sufficient degradation of inositol-hexaphosphate and inositol-pentaphosphate is achieved to increase the bioavailability of minerals that were complexed by these inositol phosphates and on the other hand to not completely convert the inositol phosphates into inositol monophosphate and phosphoric acid. More particularly, the inventors have observed that it is advantageous to degrade the phytic acid to such a level that the average number of phosphate residues contained in the inositol phosphates (i.e. inositol mono- to hexa-phosphates) is within the range of 1.5-4.0, preferably within the range of 2.0-4.0. Although the inventors do not wish to be bound by theory it is believed that, for instance, inositol diphosphate and inositol triphosphate have virtually no effect on the bioavailability of minerals such as iron cations, whereas these inositol phosphate do somehow mitigate the pro-oxidant effect of such minerals.

The present method can suitably comprise the addition of one or more food ingredients and/or micronutrients. The method may, for instance, comprise addition of fruit and/or vegetable constituents, to the aqueous liquid, the pasteurized or sterilized product, or to the fermented product. Examples of fruit constituents that can be added include fruit chunks, fruit juice and fruit concentrate. Examples of other ingredients and additives that can be added at some stage of the present method include sweeteners, flavouring substances, preservatives, vitamins, minerals, satiety inducing or enhancing agents, cholesterol lowering agents, etc.

According to a preferred embodiment of the present invention, the method comprises the addition to the fermented product of one or minerals selected from the group consisting of iron, copper, magnesium or zinc, more preferably of one or minerals selected from iron and magnesium. Most preferably, the present method comprises the addition of iron to the fermented product obtained from step d. The addition of one or more of these minerals makes it possible to standardize the level of these minerals in the end product as the concentrations of these minerals in the raw materials, notably in the soy protein source material, can vary considerably. According to a particularly preferred embodiment iron is incorporated in the fermented product in an amount of at least 0.01 mmol/l so as to achieve a final iron concentration of at least 0.15 mmol/l.

Typically, the step of inoculating the pasteurized or sterilized liquid, involves applying a starter culture containing a sufficient amount of viable lactic acid bacteria to the liquid. Preferably, starter culture is added in an amount that is adequate to yield in the order of $10^4$- $10^9$ Cfu/ml of lactic acid bacteria right at the end of fermentation step d. According to a preferred embodiment, the starter culture delivers at the end of the fermentation $10^{4.5}$- $10^{8.5}$, preferably $10^5$- $10^8$ per ml of viable lactic acid bacteria cells.

Another aspect of the present invention concerns a lactic acid bacteria fermented soy-based product that has been subjected to phytase treatment, said fermented product, not subject of the claimed matter, containing:

- 0.5-10 wt.% of soy protein;
- 0.1-20 wt.% of oil having a polyunsaturated fatty acid content of at least 0.1% by weight of the fermented product;
- 0.01-7.5 mmol/l of iron and/or 0.5-375 mmol/l of magnesium,
- at least 3 $\mu$mol/l of inositol phosphates selected from inositol monophosphate, inositol diphosphate, inositol triphosphate, inositol tetraphosphate, inositol pentaphosphate, inositol hexaphosphate and combinations thereof; and
- 20 to 99 wt.% of water;

wherein the average number of phosphate residues of the inositol phosphates contained in the fermented product is within the range of 1.5-4.0.

According to a preferred embodiment, phytase activity in the fermented product is reduced to less than 0.1 FTU/l, more preferably less than 0.05 FTU/l, most preferably less than 0.005 FTU/l. Phytase activity in the fermented product can suitably be reduced by pasteurisation or sterilisation, especially by sterilisation. Accordingly, the fermented soy-based product preferably is a pasteurised or sterilised product, most preferably sterilised product.

The fermented product of the present invention typically contains lactic acid bacteria material in an amount equivalent to $10^9$-$10^9$ lactic acid bacteria cells per ml, said lactic acid bacteria material being selected from live lactic acid bacteria, dead lactic acid bacteria, residue of lactic acid bacteria and combinations thereof. Most preferably, the fermented product contains lactic acid bacteria material, especially lactic acid bacteria material selected from live lactic acid bacteria, dead lactic acid bacteria and combinations thereof, in an amount equivalent to $10^6$-$10^{8.5}$ lactic acid bacteria cells per ml.

The fermented product typically contains at least 0.1 wt.% of oil. Advantageously, the fermented product contains 0.1-20 wt.% of oil, especially soy oil.

The iron concentrations mentioned herein preferably relate to cationic iron, notably cationic iron selected from $Fe^{2+}$, $Fe^{3+}$ and combinations thereof. Likewise, the magnesium concentrations preferably relate to cationic magnesium, notably $Mg^{2+}$.

The molar amount of phytic acid found in soy protein sources frequently exceeds the molar amount of iron that is present in these same soy protein sources. Consequently, in order to render the iron bioavailable it is important that the molar ratio of iron to the inositol multiphospates exceeds 1:1. Here the term "inositol multiphosphates" refers to inositol phosphates selected from inositol tetraphosphate, inositol pentaphosphate, inositol hexaphosphate and combinations thereof. Preferably, in accordance with the present invention, the molar ratio of iron to the inositol multiphosphates in the fermented product exceeds 2:1, most preferably it exceeds 3:1.

The concentration of the inositol phosphates in the fermented product advantageously lies within the range of 0.05-8 mmol/l. Expressed differently, the concentration of the inositol phosphates preferably lies within the range of 5-80 $\mu$mol per gram of soy protein, more preferably within the range of 10-50 $\mu$mol per gram of soy protein.

According to a particularly preferred embodiment, the average number of phosphate residues of the inositol phosphates contained in the fermented product is within the range of 1.6-3.5.

As explained herein before, the combined content of inositol-hexaphosphate and inositol-pentaphosphate of the fermented product preferably does not exceed 5 $\mu$mol per gram of soy protein. Even more preferably the combined content of inositol-hexaphosphate and inositol-pentaphosphate of the fermented product does not exceed 3 $\mu$mol per gram of soy protein, most preferably it does not exceed 1 $\mu$mol per gram of soy protein.

Advantageously, inositol- hexaphosphate and inositol- pentaphosphate together represent less than 50 mol. %, more preferably less than 30 mol. %, and most preferably less than 15 mol. % of the total amount of inositol and inositol- phosphate that is contained in the fermented product.

According to yet another preferred embodiment, inositol diphosphate and inositol triphosphate together represent at least 20 mol.%, more preferably at least 30 mol.%, and most preferably at least 40 mol.% of the total amount of inositol-phosphate that is contained in the fermented product.

Examples of fermented soy-based products that are encompassed by the present invention include fermented soy drinks and soy-based yoghurt. A particularly preferred fermented product is a fermented soy drink, notably a fermented soy drink containing 0.5-10 wt.% of soy protein and 20-99 wt.%, preferably 60-98 wt.% of water.

The invention is further illustrated by means of the following examples.

EXAMPLES

Phosphorous analysis

Photometric detection of hydrolysed phosphorus from phytate, as described by Wyss et al (Wyss M, Pasamontes L, Friedlein A, Remy R, Tessier M, Kronenberger A et al. Biophysical characterization of fungal phytases (myo- inositol hexakisphosphate phosphohydrolases) : Molecular size, glycosylation pattern, and engineering of proteolytic resistance. Applied and Environmental Microbiology 1999; 65 (2) : 359- 366.) .

100 $\mu$l sample was taken and immediately diluted with an equal volume of 15% trichloroacetic acid to stop the enzyme reaction. Subsequently, samples were thoroughly mixed for a few seconds and centrifuged for 5 minutes at 15.000g. Supernatants were diluted 5 times in demineralised water and subsequently liberated phosphate ions were quantified by mixing 10 $\mu$l of this diluted sample with 90 $\mu$l demineralised water and 100 $\mu$l of 0.6 M $H_2SO_4$, 2% ascorbic acid and 0.5% ammonium molybdate. After 30 minutes of incubation at 45°C, absorbance at 820 nm was measured in a microtitre plate reader (Spectramax). The contribution of free phosphorus naturally present in soy was measured using a blank solution containing (soy without phytase) and subtracted from the sample values. Standard solutions of potassium phosphate (2-400 $\mu$M) were used as a reference.

Accelerated shelf life test

Headspace vials of 20 ml were filled with 2 ml sample. The vials were stored at 60°C. The temperature of 60°C was chosen to ensure that the samples did not spoil during the storage period. The samples were stored for a period of 28 days. During this period regularly samples were analyzed in triplicate with static headspace volatile analysis on a GC- MS (HP) (DBwax column: 20m x 180$\mu$m x 0.3$\mu$m, J&W scientific) for lipid oxidation markers (acetaldehyde, 1-pentene- 3- ol, 1- pentene- 3- one, 2t- pentenal, pentanal, pentane, 2t- butanal, propenal, propanal, hexanal) . The GC temperature program was as follows: 2 minutes at 35°C, 35°C/min. to 200°C, 2 minutes at 200°C. The injection volume was 250$\mu$l, no split.

Aldehyde analysis

*Analysis of off-flavour volatiles by SPME followed by GC-MS:*

2 g of sample were put in a 20 ml headspace vial and sealed with an airtight cap.

Samples were analyzed by means of solid phase micro extraction. Fiber used: Carboxen/PDMS 85 $\mu$m ex. Supelco.

Analyses were carried out on an Agilent GC/MS, equipped with a Gerstel CIS-4 injector and a Gerstel MPS-2 autosampler with SPME option. Column: VF-5; 50m * 0.2 mm * 0.33 $\mu$m

GC program:

• 40°C (2 min) - (3°/min) →160°C (0 min) - (20°/min) →250°C (2 min)

• Gas: Helium

• Flow: 1 ml/min, constant flow

SPME Sampling time: 35 min at 40°C
Desorption: 40 minutes at 170°C
Split-less time: 2 min.

Ionic iron bioavailability

All glassware was incubated over night in 10 % (v/v) $HNO_3$. On the day of the experiment all glassware was washed 5 times with milli-Q water to remove $HNO_3$.

After vigorous shaking, a samples of 60 g were taken and combined with 20 mL water in 100 mL dissolution vessels. These vessels were transferred into a dissolution apparatus (type II, Vankel VK700). The pH was adjusted to 2.0. Subsequently, pepsin (0.5 g/L) was added to each vessel, yielding a 90 mL solution of product-suspension in simulated gastric fluid at pH 2.0. After 60 minutes incubation at 37 °C with mixing at 100 rpm, a sample of the suspension was taken for total iron determination and for a simulation of the intestinal phase in an Erlenmeyer flask.

For the simulation of the intestinal phase, a dialysis membrane (Spectra/Por 7 MWCO 8000) filled with a water solution of $NaHCO_3$ was placed in the Erlenmeyer flask. The amount of sodium bicarbonate present in the dialysis membrane was able to adjust the simulated digestion to pH 6.8. After 30 minutes incubation in a water bath at 37 °C and continuous shaking (100 rpm), a mix of pancreatin (0.4 mg/mL) and bile acids solution (1.25 mg/mL) was added to the flask. The flask was further incubated with the dialysis membrane for another 2 hours in the same water bath at 37 °C with continuous shaking (100 rpm). Hereafter, the dialysis membrane was removed and a sample of the content of the dialysate was taken for determination of the amount of ionic dialysable iron.

Total iron was determined by plasma emission spectroscopy. Ionic iron (sum of $Fe^{2+}$ and $Fe^{3+}$) was determined using a Roche/Hitachi Analyser and reagents for the analysis of iron in human serum based on ferrozine.

Example 1

A soybase of 2.5% protein content was prepared by mixing 5.6% soy milk powder (Soy Supreme Fibre Reduced soy bean powder SunOpta Grains and Food Group, Hope, MN, USA) in hot water (90°C). The powder was hydrated for at least 15 minutes before addition of 2% sucrose, 1% glucose. The mix was then allowed to cool down to 43 °C and split into 3 equal aliquots and further processed as followed:

• Aliquot 1 was kept for 1 hour at 43°C before inoculation with 0.02% of a commercially available frozen yoghurt culture concentrate T-071016 (defined mixed culture of Streptococcus thermophilus strains, provided by Chr Hansen, Hørsholm, Denmark). The mixture was incubated for an additional period of 3 hrs at 43°C and subsequently stored at 4°C until analysed by SPME followed by GC-MS.

• Aliquot 2 was treated with 0.01% (w/w) of a commercial available enzyme preparation of phytase (DSM phytase 5000 liquid [at least 5750 FTU/g] obtained from DSM Food Specialities B.V., Delft, The Netherlands) and kept at 43°C for 1 h. After that period, the mixture was inoculated with a commercially available frozen yoghurt culture concentrate T-071016 (defined mixed culture of *Streptococcus thermophilus* strains, provided by Chr Hansen, Hørsholm, Denmark). Incubation was continued for an additional period of 3 hrs at 43°C and subsequently stored at 4°C until analysed by by SPME followed by GC-MS.

• Aliquot 3 was kept for 1 hour at 43°C, before the mixture was inoculated with a commercially available frozen yoghurt culture concentrate T-071016 (defined mixed culture of *Streptococcus thermophilus* strains, provided by Chr Hansen, Hørsholm, Denmark) and at the same time treated with 0.01% (w/w) of a commercial available enzyme preparation of phytase (DSM phytase 5000 liquid obtained from DSM Food Specialities B.V., Delft, the Netherlands). Incubation was continued for an additional period of 3 hrs at 43°C and subsequently stored at 4°C until analysed by by SPME followed by GC-MS.

*Hexanal analysis:*

Following incubation, aliquots 1, 2 and 3 were analysed for hexanal levels as described above. The results obtained are descrbed in Table 1

Table 1

| After 3hrs fermentation | Hexanal content (area under peak) |
|---|---|
| Aliquot 1 | 160,000 |
| Aliquot 2 | 220,000 |
| Aliquot 3 | 170,000 |

These results clearly indicate that concurrent phytase treatment and fermentation yields less oxidation flavour than phytase treatment followed by fermentation. The observed difference would have been even greater if aliquot 2 had been prepared from a phytase treated soy bean powder, followed by a 3 hour fementation as described herein before.

Example 2

A soybase of 5% protein content was prepared using the procedure described in Example 1. In addition, an aqueous phytase solution was prepared by dissolving phytase (DSM phytase 5000 liquid obtained from DSM Food Specialities B.V., Delft, The Netherlands) in tap water (100X dilution).

To 5 L soybase, 5 ml diluted phytase was added (total enzyme dilution = 100.000x), followed by incubation at 43°C. In order to mimic a fermentation process in a reproducible way the mixture was gradually acidified with lactic acid. Thus aliquots of lactic acid were added in 30 minutes intervals to decrease the pH of the mixture stepwise by 0.5 pH units each time, reaching a final pH of 4.5 after 5 hours. Samples of 750 ml were taken after 0, 1, 2, 3, 4 and 5 hours, diluted 2x with demineralised water, adjusted to pH 4.0 with lactic acid and ultraturraxed for 10 seconds. These samples were immediately  subjected to homogenisation and pasteurisation (at 77°C) in order to stop phytase activity.

The inositol phosphate composition of the pasteurized samples was determined by analyzing the free phosphate levels in the samples, using the phosphorous analysis procedure described herein before. The results are shown in Table 2.

The pasteurized samples were also subjected to an accelerated oxidation test as described herein before. Hexanal levels in the samples were determined at regular intervals using static headspace analysis as described herein before. The development of hexanal levels in all samples was found to follow an S-curve that reached its maximum after 10-15 days. For each sample the time after which hexanal levels reached 50% of their maximum level was determined ($t_{1/2}$). The results are shown in Table 2.

Ionic iron bioavailability of the iron contained in the pasteurized samples was determined using the *in vitro* test described herein before.

The results are again depicted in Table 2.

Table 2

| Incubation time | Free phosphate | Oxidation $t_{1/2}$ | Ionic bioavailable iron |
|---|---|---|---|
| 0 hr | 3 mM | 12 days | 11.9% |
| 1 hr | 4 mM | 12 days | 14.7% |
| 2 hrs | 7.5 mM | 11 days | 21.4% |
| 3 hrs | 10 mM | 11 days | 37.7% |
| 4 hrs | 14 mM | 9 days | 37.3% |
| 5 hrs | 14 mM | 9 days | 38.1% |

These results show that the best result in terms of flavor and iron bioavailability is achieved by partial dephytinization of the phytic acid. In this test the optimum result was achieved after 2-3 hours, which equates to an average number of  phosphate residues in the inositol phosphates of in the range of 2.5 to 3.8.

**Claims**

1. A method of preparing a fermented soy-based product, said method comprising:

    a. providing an aqueous liquid containing 0.5-10 wt.% of soy protein;
    b. pasteurizing or sterilizing the aqueous liquid;
    c. inoculating the pasteurised or sterilised liquid with a lactic acid bacterium containing starter culture;
    d. fermenting the inoculated aqueous liquid by incubation at a temperature in the range of 15-48°C for 0.5-24 hours to obtain a fermented product;

    wherein phytase is added to the pasteurized or sterilized liquid no later than 10 minutes before termination of fermentation step d, said phytase being incorporated in the pasteurized or sterilized liquid in an amount of not more than 11 FTU per gram of soy protein; one FTU being the activity of phytase that generates 1 $\mu$mol of inorganic phosphorus per minute from an excess of sodium phytate at pH 5.5 and 37°C; and
    wherein fermentation step d. is terminated by one or more of the following actions:

    • pasteurization of the fermented product;
    • cooling of the fermented product to a temperature of less than 10°C;
    • adjustment of the pH of the fermented product to a pH of less than 4.5.

2. Method according to claim 1, wherein phytase is incorporated in the aqueous liquid or the pasteurized or sterilized liquid in an amount of at least 0.1 FTU per gram of soy protein.

3. Method according to claim 1 or 2, wherein phytase is incorporated in the aqueous liquid or the pasteurized or sterilized liquid in an amount of not more than 5 FTU per gram of soy protein.

4. Method according to claim 1 or 2, wherein the phytase is added at least 30 minutes, preferably at least 1 hour before termination of fermentation step d.

5. Method according to any one of the preceding claims, wherein the phytase is added not more than 12 hours, preferably not more than 6 hours before termination of fermentation step d.

6. Method according to any one of the preceding claims, wherein fermentation step d. comprises incubation at a temperature in the range of 30-48°C for 0.5-10 hours.

7. Method according to any one of the preceding claims, wherein fermentation step d. is terminated by pasteurization of the fermented product.

8. Method according to any one of the preceding claims, wherein the combined content of inositol-hexaphosphate and inositol-pentaphosphate of the aqueous liquid exceeds 1 $\mu$mol per gram of soy protein.

9. Method according to any one of the preceding claims, wherein the average number of phosphate residues of the inositol phosphates contained in the fermented product is within the range of 1.5-4.0.

10. Method according to any one of the preceding claims, wherein the combined content of inositol-hexaphosphate and inositol-pentaphosphate expressed in mol is reduced by at least 80% during the period starting with the addition of the phytase and ending with the termination of fermentation step d.

11. Method according to any one of the preceding claims, wherein inositol-diphosphate and inositol-triphosphate together represent at least 30 mol.% of the total amount of inositol-phosphate that is contained in the fermented product.

**Patentansprüche**

1. Verfahren zum Herstellen eines fermentierten, auf Soja basierenden Produktes, wobei das Verfahren Folgendes aufweist:

   a. Bereitstellen einer wässrigen Flüssigkeit, die 0,5 bis 10 Gew.-% Sojaprotein enthält;
   b. Pasteurisieren oder Sterilisieren der wässrigen Flüssigkeit;
   c. Impfen der pasteurisierten oder sterilisierten Flüssigkeit mit einem Milchsäurebakterium, das eine Starterkultur enthält;
   d. Fermentieren der geimpften wässrigen Flüssigkeit durch Inkubieren für 0,5 bis 24 Stunden bei einer Temperatur im Bereich von 15 bis 48°C, um ein fermentiertes Produkt zu erhalten;

   wobei der pasteurisierten oder sterilisierten Flüssigkeit Phytase nicht später als 10 Minuten vor dem Ende des Fermentierungsschritts d zugesetzt wird, wobei die Phytase in einer Menge von nicht mehr als 11 FTU pro Gramm Sojaprotein in der pasteurisierten oder sterilisierten Flüssigkeit aufgenommen wird, wobei 1 FTU die Aktivität der Phytase ist, die bei pH = 5,5 und 37°C aus einem Natriumphytatüberschuss 1 µMol anorganischen Phosphor pro Minute erzeugt; und
   wobei der Fermentierungsschritt d durch eine oder mehrere der folgenden Wirkungen beendet wird:

   • Pasteurisieren des fermentierten Produkts;
   • Abkühlen der fermentierten Produktes auf eine Temperatur von weniger als 10°C;
   • Einstellen des pH-Wertes des fermentierten Produktes bei einem pH-Wert von weniger als 4,5.

2. Verfahren nach Anspruch 1,
   wobei die Phytase in der wässrigen Flüssigkeit oder der pasteurisierten oder sterilisierten Flüssigkeit in einer Menge von mindestens 0,1 FTU pro Gramm Sojaprotein aufgenommen wird.

3. Verfahren nach Anspruch 1 oder 2,
   die Phytase in der wässrigen Flüssigkeit oder der pasteurisierten oder sterilisierten Flüssigkeit in einer Menge von nicht mehr als 5 FTU pro Gramm Sojaprotein aufgenommen wird.

4. Verfahren nach Anspruch 1 oder 2,
   wobei die Phytase mindestens 3 Minuten, vorzugsweise mindestens 1 Stunde vor dem Ende des Fermentierungsschritts d zugesetzt wird.

5. Verfahren nach einem der vorstehenden Ansprüche,
   wobei die Phytase nicht mehr als 12 Stunden, vorzugsweise nicht mehr als 6 Stunden vor dem Ende des Fermentierungsschritts d zugesetzt wird.

6. Verfahren nach einem der vorstehenden Ansprüche,
   wobei der Fermentierungsschritt d das Inkubieren für 0,5 bis 10 Stunden bei einer Temperatur im Bereich von 30 bis 48°C aufweist.

7. Verfahren nach einem der vorstehenden Ansprüche,
   wobei der Fermentierungsschritt d durch Pasteurisieren des fermentierten Produktes beendet wird.

8. Verfahren nach einem der vorstehenden Ansprüche,
   wobei die Summe des Gehalts an Inositolhexaphosphat und Inositolpentaphosphat der wässrigen Flüssigkeit 1 µMol pro Gramm Sojaprotein übersteigt.

9. Verfahren nach einem der vorstehenden Ansprüche,
   wobei die durchschnittliche Anzahl der Phosphatreste der im fermentierten Produkt enthaltenen Inositolphosphate im Bereich von 1,5 bis 4,0 liegt.

10. Verfahren nach einem der vorstehenden Ansprüche,
    wobei die Summe des Gehalts an Inositolhexaphosphat und Inositolpentaphosphat, in Mol angegeben, während des Zeitraums um mindestens 80% verringert wird,
    der mit der Zugabe der Phytase beginnt und mit dem Abschluss des Fermentierungsschrittes d endet.

**11.** Verfahren nach einem der vorstehenden Ansprüche,
wobei Inositoldiphospat und Inositoltriphosphat zusammen mindestens 30 Mol-% der Gesamtmenge an Inositolphosphat ausmachen, das im fermentierten Produkt enthalten ist.

**Revendications**

**1.** Méthode de préparation d'un produit fermenté à base de soja, ladite méthode comprenant :

   a. l'obtention d'un liquide aqueux contenant 0,5% à 10% en poids de protéines de soja ;
   b. la pasteurisation ou la stérilisation du liquide aqueux ;
   c. l'inoculation du liquide pasteurisé ou stérilisé avec une culture starter contenant des bactéries d'acide lactique ;
   d. la fermentation du liquide aqueux inoculé par incubation à une température située dans la plage allant de 15°C à 48°C pendant 0,5 heure à 24 heures pour obtenir un produit fermenté ;

dans laquelle une phytase est ajoutée au liquide pasteurisé ou stérilisé au plus tard 10 minutes avant la fin de l'étape d de fermentation, ladite phytase étant incorporée dans le liquide pasteurisé ou stérilisé en une quantité d'au plus 11 FTU par gramme de protéines de soja ; un FTU étant l'activité de la phytase qui génère 1 µmole de phosphore inorganique par minute à partir d'un  excès de phytase de sodium à un pH de 5,5 et à 37°C ; et
dans laquelle l'étape d de fermentation est arrêtée par une ou plusieurs des actions suivantes :

   • la pasteurisation du produit fermenté ;
   • le refroidissement du produit fermenté à une température inférieure à 10°C ;
   • l'ajustement du pH du produit fermenté à un pH inférieur à 4,5.

**2.** Méthode selon la revendication 1, dans laquelle la phytase est incorporée dans le liquide aqueux ou le liquide pasteurisé ou stérilisé en une quantité d'au moins 0,1 FTU par gramme de protéines de soja.

**3.** Méthode selon la revendication 1 ou 2, dans laquelle la phytase est incorporée dans le liquide aqueux ou le liquide pasteurisé ou stérilisé en une quantité d'au plus 5 FTU par gramme de protéines de soja.

**4.** Méthode selon la revendication 1 ou 2, dans laquelle la phytase est ajoutée au moins 30 minutes, de préférence au moins 1 heure avant la fin de l'étape d de fermentation.

**5.** Méthode selon l'une quelconque des revendications précédentes, dans laquelle la phytase est ajoutée au plus 12 heures, de préférence au plus 6 heures avant la fin de l'étape d de fermentation.

**6.** Méthode selon l'une quelconque des revendications précédentes, dans laquelle l'étape d de fermentation comprend une incubation à une température située dans la plage allant de 30°C à 48°C pendant 0,5 heure à 10 heures.

**7.** Méthode selon l'une quelconque des revendications précédentes, dans laquelle l'étape d de fermentation est terminée par la pasteurisation du produit fermenté.

**8.** Méthode selon l'une quelconque des revendications précédentes, dans laquelle les teneurs combinées en inositol-hexaphosphate et en inositol-pentaphosphate du liquide aqueux dépassent 1 µmole par gramme de protéines de soja.

**9.** Méthode selon l'une quelconque des revendications précédentes, dans laquelle le nombre moyen de résidus de phosphate des inositol phosphates contenus dans le produit fermenté est situé dans la plage allant de 1,5 à 4,0.

**10.** Méthode selon l'une quelconque des revendications précédentes, dans laquelle les teneurs combinées en inositol-hexaphosphate et en inositol-pentaphosphate exprimées en mole diminuent d'au moins 80% pendant la période commençant par l'ajout de la phytase et se terminant à la fin de l'étape d de fermentation.

**11.** Méthode selon l'une quelconque des revendications précédentes, dans laquelle l'inositol-diphosphate et l'inositol-triphosphate représentent ensemble au moins 30% en mole de la quantité totale des inositol-phosphates qui est contenue dans le produit fermenté.

**14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006098721 A
- US 20070014910 A
- WO 2006043478 A
- US 7108881 B

**Non-patent literature cited in the description**

- **M. WYSS et al.** Biophysical Characterisation of fungal phytases (myo-Inositol hexakisphosphate phosphohydrolase): Molecular size, glycosylation pattern, and engineering of proteolytic resistance. *Appl. Envir. Micr.,* 1999, vol. 65 (2), 359-366
- **WYSS M ; PASAMONTES L ; FRIEDLEIN A ; REMY R ; TESSIER M ; KRONENBERGER A et al.** Molecular size, glycosylation pattern, and engineering of proteolytic resistance. *Applied and Environmental Microbiology,* 1999, vol. 65 (2), 359-366
- **CHR HANSEN, HØRSHOLM.** *Streptococcus thermophilus strains*